# EUROPÄISCHE PATENTSCHRIFT

(11) **EP 3 207 640 B1**
(45) Veröffentlichungstag und Bekanntmachung des Hinweises auf die Patenterteilung: **11.03.2020**
(21) Anmeldenummer: 15793714.5
(22) Anmeldetag: 09.10.2015
(51) Int. Cl.: H04B 5/00, H01R 24/42, H01R 24/84

(54) **STECKVERBINDER ZUR KAPAZITIVEN DATENÜBERTRAGUNG**
PLUG CONNECTOR FOR CAPACITIVELY TRANSMITTING DATA
CONNECTEUR ENFICHABLE POUR LA TRANSMISSION CAPACITIVE DE DONNÉES

(30) Priorität: 17.10.2014 DE 102014115122
(43) Veröffentlichungstag der Anmeldung: 23.08.2017
(73) Patentinhaber: HARTING Electronics GmbH, 32339 Espelkamp (DE)
(72) Erfinder: PAPE, Günter, 32130 Enger (DE); DE VANSSAY, Jean-Merri, 75004 Paris (FR)
(74) Vertreter: Eisenführ Speiser
(86) Internationale Anmeldenummer: PCT/EP2015/073427
(87) Internationale Veröffentlichungsnummer: WO 2016/058946

(56) Entgegenhaltungen:
- EP-A2- 1 206 012
- DE-B3-102006 019 555
- DE-C1- 19 719 730
- DE-U1-202008 005 013
- US-A- 5 841 122
- US-A1- 2007 103 204
- US-A1- 2011 248 801

## Beschreibung

Die Erfindung geht aus von einem Steckverbinder nach dem Oberbegriff des unabhängigen Anspruchs 1. Die Erfindung bezieht sich ebenfalls auf ein System aus einem Steckverbinder und einem Gegensteckverbinder.

Derartige Steckverbinder übermitteln Signale und/oder Daten, ohne dass die jeweiligen Signalübertragungsmittel in direktem Kontakt zueinander stehen. Derartige Systeme aus Steckverbinder und Gegensteckverbinder werden insbesondere dann eingesetzt, wenn viele Steckzyklen erreicht werden sollen. Die signalübertragenden Elemente unterliegen keinem Verschleiß.

### Stand der Technik

Die Signalübertragung mithilfe von induktiv und/oder kapazitiv wirkenden Signalübertragungsmitteln ist bekannt. Die DE 10 2010 045 742 A1 zeigt eine Kopplung mit Mitteln, hier Spulen, zur induktiven Übertragung von Datensignalen.

Die hier vorgeschlagene Technik ist aber zu groß bauend, um sie in kleineren Steckverbindern einzusetzen. In vielen Anwendungen werden oft kleine und kompakte Steckverbinder benötigt.

Das Dokument EP 1 206 012 A1 beschreibt einen Steckverbinder umfassend ein Steckerelement und ein mit dem Steckerelement lösbar verbindbares Buchsenelement, zum Anschluss einer Übertragungsleitung an mindestens einen Sensor. Damit bei miteinander verbundenem Steckerelement und Buchsenelement zwischen das Steckerelement und das Buchsenelement eindringende Feuchtigkeit, Staub oder Schmutzpartikel und aggressive Substanzen die Signalübertragung zwischen dem Steckerelement und dem Buchsenelement nicht beeinträchtigen, schlägt die EP 1 206 012A1 vor, dass der Steckverbinder Mittel zur Realisierung einer kontaktlosen Signalübertragung zwischen dem Steckerelement und dem Buchsenelement aufweist. Es ist insbesondere an eine induktive, kapazitive oder optische Signalübertragung gedacht.

Eine Steckverbindung gemäß DE 197 19 730 C1 für einen explosionsgefährdeten Bereich zur Energie- und Datenübertragung mittels elektrischer Größen bei einem Bussystem weist ein als Übertrager ausgebildetes Primärteil und ein Sekundärteil sowie Begrenzereinrichtungen für zu übertragende elektrische Größen auf. Die Begrenzereinrichtungen sind im Primärteil angeordnet und sind zur Begrenzung der an das Sekundärteil zu übertragenden elektrischen Größen auf für die jeweilige Zündschutzart zulässigen Werte ausgelegt.

### Aufgabenstellung

Die Aufgabe der Erfindung besteht darin, einen Steckverbinder vorzuschlagen, der eine gute Leistungsfähigkeit in einem weiten Frequenzbereich zeigt und gleichzeitig eine kompakte Bauweise aufweist.

Die Aufgabe wird durch die kennzeichnenden Merkmale des unabhängigen Anspruchs 1 gelöst.

Vorteilhafte Ausgestaltungen der Erfindung sind in den Unteransprüchen angegeben.

An den erfindungsgemäßen Steckverbinder kann ein mehradriges Kabel mit zumindest zwei oder mehr einzelnen Leitern angeschlossen werden. Der Steckverbinder weist zumindest ein Signalübertragungsmittel auf, welches zur berührungslosen Signalübertragung vorgesehen ist. Berührungslose Signalübertragung bedeutet in diesem Fall, dass sich die Signalübertragungsmittel von einem Steckverbinder und einem dazu passenden Gegensteckverbinder physikalisch nicht berühren. Berührungslos könnte auch bedeuten, dass lediglich keine elektrisch leitende Verbindung zwischen den Signalübertragungsmitteln besteht.

Der Steckverbinder weist einen Mikrochip auf, der einerseits mit dem Signalübertragungsmittel oder mit den Signalübertragungsmitteln verbunden ist und andererseits mit den einzelnen Leitern des angeschlossenen Kabels elektrisch verbindbar ist.

Es handelt sich bei den Signalübertragungsmitteln um Ringkondensatoren und/oder Plattenkondensatoren. Dadurch ist eine platzsparende Bauweise möglich. Außerdem ist durch derlei Signalübertragungsmittel die Verdrehung zwischen Steckverbinder und Gegensteckverbinder nicht relevant. Die Signale werden immer gleich gut übertragen.

Bei dem Mikrochip handelt es sich um einen aktiven Mikrochip. Der Mikrochip benötigt eine Stromversorgung, die beispielsweise durch die eingehenden Leiter gespeist wird. Es kann aber auch eine separate Stromversorgung, beispielsweise eine Batterie, im Steckverbinder vorgesehen sein. Der Mikrochip kann eingehende Signale nach einem so genannten Multiplexingverfahren verarbeiten und weiterleiten. Dadurch können eine Vielzahl von eingehenden Leitern und zugehörigen Signalen durch lediglich ein Signal-übertragungselement weitergeleitet werden. Bei der DE 10 2010 045 742 A1 ist jedem eingehenden Leiter ein induktives Signalübertragungsmittel zugeordnet. Bei einem vieladrigen Kabel würde ein Steckverbinder sehr komplex.

Der Mikrochip ist außerdem in der Lage die Sendeleistung der Signalübertragungsmittel, je nach Abstand von Steckverbinder und Gegensteckverbinder, anzupassen. Dadurch ist es nicht notwendig einen exakten Abstand zwischen Steckverbinder und Gegensteckverbinder einzuhalten.

Durch den aktiven Mikrochip ist es möglich einen weiten Frequenzbereich von binären Signalen bis hin zu hohen Datenübertragungsraten im Megabitbereich bzw. den zugehörigen Frequenzen abzudecken.

Durch den aktiven Chip gibt es bei der Signal- oder Datenübertragung keine frequenzabhängige Dämpfung, da aktiv angesteuerte Kondensatoren (als Datenübertragungsmittel) kein Tief-, Hoch- oder Bandpassverhalten zeigen. Eine aktiv betriebene kapazitive Kopplung, wie sie hier vorgeschlagen wird, zeigt keine frequenzabhängige Dämpfung, was dem Steckverbinder ein breites Einsatzgebiet eröffnet.

Der Steckverbinder weist zwei Signalübertragungsmittel auf. Das eine Signalübertragungsmittel ist zum Senden der am Steckverbinder, über das angeschlossene Kabel, eingehenden Signale vorgesehen. Das andere Signalübertragungsmittel ist zum Empfang der vom Gegenstecker eingehenden Signale vorgesehen. Der hier vorgeschlagene Steckverbinder kommt dank des aktiven Mikrochips mit lediglich zwei Signalübertragungsmitteln aus, was eine einfache und kompakte Bauweise des Steckverbinders ermöglicht.

Ein Signalübertragungsmittel ist als Ringkondensator und das andere Signalübertragungsmittel als kreisförmige Kondensatorplatte ausgebildet. Diese Geometrie erlaubt es die Signalübertragungsmittel steckseitig in die Stirnfläche des Steckverbinders zu integrieren.

Vorzugsweise weisen der Ringkondensator und die kreisförmige Kondensatorplatte eine gleich große Oberfläche auf. Dadurch wird die Sende- und Empfangsfunktion des erfindungsgemäßen Steckverbinders optimiert.

Der erfindungsgemäße Steckverbinder ist Störunempfindlich, da die Signale und/oder Daten nicht per Funk übertragen werden.

Der Steckverbinder weist ein Steckverbindergehäuse auf, dessen Stirnflächen eine Steckseite und eine Anschlussseite bilden. Vorteilhafterweise sind die Signalübertragungsmittel von der Steckseite des Gehäuses vollständig umschlossen. Oder anders gesagt sind die Signalübertragungsmittel beziehungsweise die oben beschriebenen Kondensatoren an der zur Steckrichtung weisenden Stirnseite des Steckverbinders angeordnet und dort mit einem Kunststoffmaterial überzogen. Dies wird beispielswiese durch einen Spritzgussprozess realisiert. Hierdurch sind die Signalübertragungsmittel vor Umwelteinflüssen geschützt. Dadurch kann der Steckverbinder in schmutzigen und rauen Umgebungen eingesetzt werden. Im ungesteckten Zustand ist der einzelne Steckverbinder längswasserdicht und erfüllt die Schutzklasse IP6x.

Vorzugsweise ist das Signalübertragungsmittel steckseitig parallel zur Stirnfläche des Steckverbinders ausgerichtet. Dadurch können Steckverbinder und Gegensteckverbinder optimal Signale beziehungsweise Daten austauschen.

Besonders vorteilhaft ist es, wenn der Steckverbinder einen Isolierkörper aufweist, der zumindest einen Leiterkanal aufweist, der einseitig elektrisch mit dem Mikrochip verbunden ist und anderseitig elektrisch mit einem Leiter des angeschlossenen Kabels verbindbar ist. Vorzugsweise ist der zumindest eine Leiterkanal mithilfe der MID-Technik hergestellt. Die Anzahl der Leiterkanäle wird vorzugsweise auf die Anzahl der eingehenden Leiter des mehradrigen Kabels und der Signalübertragungsmittel abgestimmt. In der Regel sind daher mehrere solcher Leiterkanäle vorgesehen. Die MID-Technik ermöglicht eine kompakte Bauweise des Steckverbinders.

Vorteilhafterweise ist im Steckverbindergehäuse ein Federelement, vorzugsweise eine Spiralfeder, derart angeordnet, dass die Federkraft des Federelements den Isolierkörper axial in Steckrichtung des Steckverbinders drückt. Die Feder wirkt dabei auf eine Stirnseite des Isolierkörpers ein. Das andere Ende des Isolierkörpers wird dadurch zur Steckseite des Steckverbindergehäuses gepresst und liegt dort eng an. Wie bereits oben beschrieben weist diese Stirnseite auch die Signalübertragungsmittel auf.

Idealerweise sind die jeweiligen Signalübertragungsmittel im gesteckten Zustand parallel zueinander ausgerichtet. Die Signal- bzw. Datenübertragung funktioniert so am besten.

Die Erfindung bezieht sich ebenfalls auf ein System aus Steckverbinder und Gegensteckverbinder, die beide jeweils zumindest ein Signalübertragungsmittel aufweisen, wobei die jeweiligen Signalübertragungsmittel im gesteckten Zustand parallel zueinander ausgerichtet sind.

Vorzugsweise haben die Signalübertragungsmittel im gesteckten Zustand einen Abstand von 1,1 Millimeter (mm) oder weniger zueinander. Diese Entfernung ermöglicht eine gute Signal- bzw. Datenübertragung.

Der Steckverbinder und/oder der Gegensteckverbinder des Systems sind idealerweise wie der erfindungsgemäß beanspruchte Steckverbinder ausgeführt. Steckverbinder und Gegensteckverbinder können auch baugleich ausgeführt sein. Im Folgenden werden Steckverbinder und Gegensteckverbinder auch als Stecker bezeichnet.

Vorzugsweise sind der Steckverbinder und der Gegensteckverbinder über eine so genannte Push-Pull-Verbindung miteinander verbunden sind. Eine Push-Pull-Verbindung ist besonders bei Hochfrequenzanwendungen ideal, da ein hoher Vibrationsschutz besteht. Durch das hermaphroditische Design der Isolierkörper von Stecker und Gegenstecker kann eine Push-Pull-Verbindung besonders einfach realisiert werden. Es muss nicht auf eine spezielle Ausrichtung der Steckgesichter zueinander, innerhalb der Drehachse, geachtet werden.

Es ist aber auch denkbar eine Schraubverbindung, eine Bajonettverriegelung, eine Verriegelung über einen Verriegelungsbügel oder Vergleichbares vorzusehen. Das hermaphroditische Design von Stecker und Gegenstecker ermöglicht hier eine Vielzahl von Lösungen.

Durch das hermaphroditische Design ist es außerdem nicht notwendig, den Steckverbinder mit mechanischen Polarisationsmitteln zu versehen.

Das hier vorgeschlagene Steckverbinderdesign lässt hohe Stecktoleranzen zu. Die ggf. unterschiedliche Entfernung zwischen den Signalübertragungsmitteln kann durch den aktiven Chip ausgeglichen werden.

Ein System, welches mit einem erfindungsgemäßen Steckverbinder betrieben wird, weist immer eine so genannte galvanische Trennung auf, da die Signalübertragungsmittel von Stecker und Gegenstecker bzw. Buchse keinen physikalischen Kontakt haben.

### Ausführungsbeispiele

Ausführungsbeispiele der Erfindung sind in den Zeichnungen dargestellt und werden im Folgenden näher erläutert. Es zeigen:
- Fig. 1: eine Seitenansicht eines Systems von einem Steckverbinder und Gegensteckverbinder,
- Fig. 2: eine perspektivische Explosionszeichnung des Gegensteckverbinders,
- Fig. 3: eine perspektivische Explosionszeichnung des Steckverbinders,
- Fig. 4: eine perspektivische Schnittdarstellung des Systems von Steckverbinder und Gegensteckverbinder,
- Fig. 5: eine Draufsicht eines Isolierkörpers des Steckverbinders und/oder des Gegensteckverbinders auf die Ober- und auf die Unterseite,
- Fig. 6: eine Seitenansicht des Isolierkörpers des Steckverbinders und/oder des Gegensteckverbinders,
- Fig. 7: eine weitere Ausführungsform und hier insbesondere eine perspektivische Darstellung eines Steckbereichs des Steckverbinders,
- Fig. 8: eine perspektivische Darstellung des Steckbereichs des Steckverbinders mit einer Kabelzugentlastung,
- Fig. 9: eine perspektivische Darstellung eines weiteren Steckverbinders und/oder Gegensteckverbinders mit angeschlossenem Kabel,
- Fig. 10: eine weitere Ausführungsform und hier insbesondere eine beidseitige Ansicht einer Leiterplatte desselben,
- Fig. 11: eine perspektivische Darstellung von Bauteilen, die einen Isolierkörper des Steckverbinders bilden,
- Fig. 12: eine Seitenansicht von den Isolierkörpern von Steckverbinder und Gegensteckverbinder,
- Fig. 13: eine perspektivische Explosionszeichnung eines Ausführungsbeispiels des Steckverbinders,
- Fig. 14: eine perspektivische Ansicht eines Isolierkörpers eines ersten Ausführungsbeispiels,
- Fig. 15: eine Teilansicht des Isolierkörpers aus Figur 14 aus anderer Perspektive mit zwei Signalübertragungsmitteln,
- Fig. 16: eine Seitenansicht von zwei zueinander angeordneten Isolierkörpern des ersten Ausführungsbeispiels,
- Fig. 17: eine Ansicht von Steckverbinder und Gegensteckverbinder des ersten Ausführungsbeispiels,
- Fig. 18: eine perspektivische Ansicht eines Isolierkörpers eines zweiten Ausführungsbeispiels,
- Fig. 19: eine perspektivische Ansicht eines anderen Isolierkörpers des zweiten Ausführungsbeispiels,
- Fig. 20: eine Seitenansicht von zwei zueinander angeordneten Isolierkörpern des zweiten Ausführungsbeispiels,
- Fig. 21: eine Ansicht von Steckverbinder und Gegensteckverbinder des zweiten Ausführungsbeispiels,
- Fig. 22 bis 24: Teilansichten eines Isolierkörpers des ersten oder zweiten Ausführungsbeispiels,
- Fig. 25: eine perspektivische Ansicht eines Isolierkörpers des zweiten Ausführungsbeispiels mit daran angebrachtem Kabelanschlussstecker,
- Fig. 26: eine perspektivische Ansicht eines Isolierkörpers des ersten Ausführungsbeispiels mit daran angebrachtem Kabelanschlussstecker mit angeschlossenem Kabel,
- Fig. 27 und 28: Ansichten zur Illustration eines Einbettens des Isolierkörpers des ersten Ausführungsbeispiels,
- Fig. 29, 30 und 31: perspektivische Ansichten des Steckverbinders und des Gegensteckverbinders des ersten Ausführungsbeispiels, und
- Fig. 32 und 33: perspektivische Ansichten des Steckverbinders und Gegensteckverbinders des zweiten Ausführungsbeispiels.

Die Figuren enthalten teilweise vereinfachte, schematische Darstellungen. Zum Teil werden für gleiche, aber gegebenenfalls nicht identische Elemente identische Bezugszeichen verwendet. Verschiedene Ansichten gleicher Elemente könnten unterschiedlich skaliert sein.

### Ausführungsbeispiel, das nicht Teil der Erfindung formt:

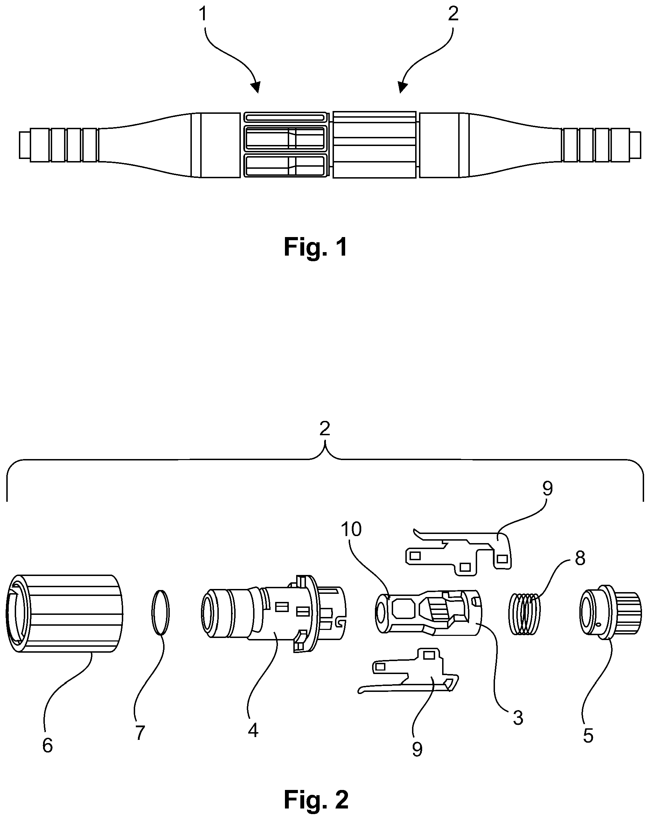

Die Figur 1 zeigt einen Steckverbinder 1, der mit einem dazu passenden Gegensteckverbinder 2 zur Signalübertragung verbunden (gesteckt) ist. Der hier gezeigte Steckverbinder und Gegensteckverbinder ist zur berührungslosen Signalübertragung vorgesehen. Die Signalübertragung erfolgt hier im Wesentlichen auf kapazitivem Wege, wobei naturgemäß auch immer induktive Komponenten eine Rolle spielen können. Letztere spielen hier aber, wenn überhaupt, eine unwesentliche Rolle. Die Erfindung vermeidet explizit eine Antennenfunktion der Signalübertragungsmittel, um unter Anderen die Abhörsicherheit der Signale/Daten zu gewährleisten.

In der Figur 2 ist eine Explosionszeichnung des Gegensteckverbinders 2 zu sehen. Der Gegensteckverbinder 2 besteht aus einem Isolierkörper, einem Gehäuse 4, einem Kabelabgang 5 und einer Verschraubhülse 6. Der Steckbereich des Gegensteckverbinders 2 wird durch einen Dichtring 7 abgedichtet. Der Isolierkörper 3 wird mithilfe einer Spiralfeder 8, die sich am Kabelabgang 5 abstützt, permanent in Richtung des Steckbereichs gedrückt. Dadurch ist gewährleistet, dass die für den Signaltransport relevante Stirnseite des Isolierkörpers 3, nahe dem Steckbereich des Gegensteckverbinders 2 angeordnet ist. Die Verschraubhülse 6 wird mithilfe von Fixierblechen 9 am Gehäuse 4 fixiert.

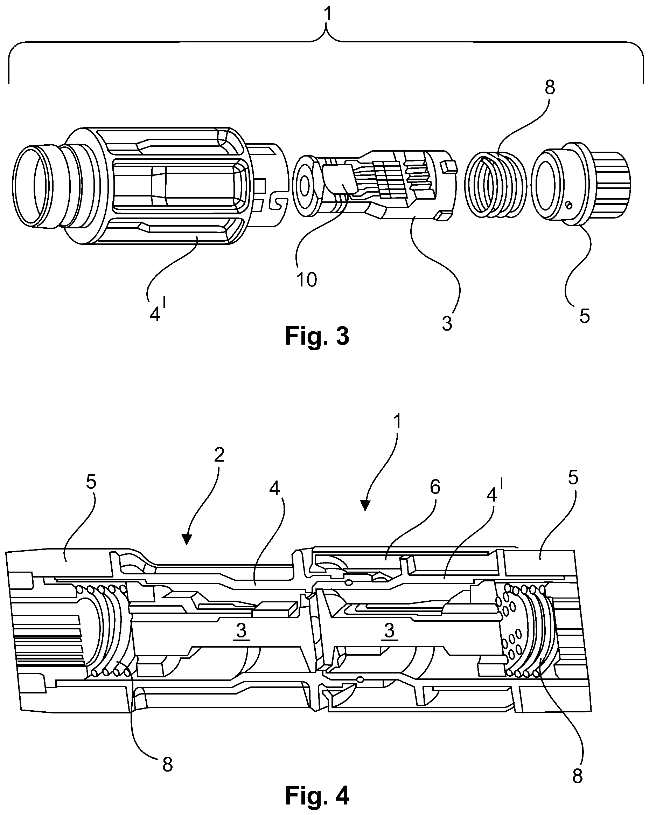

Die Figur 3 zeigt eine perspektivische Explosionszeichnung des Steckverbinders 1. Gleich funktionelle Teile werden hier mit denselben Bezugszeichen versehen wie beim Gegensteckverbinder 2. Auch hier wird der Isolierkörper 3 durch eine Spiralfeder 8 in Steckrichtung gedrückt. Das Gehäuse 4 des Steckverbinders 1 weist ein Außengewinde auf, welches mit einem Innengewinde der Verschraubhülse 6 des Gegensteckverbinders 2 derart zusammenwirkt, dass die Stecker (Steckverbinder 1 und Gegensteckverbinder 2) miteinander verbunden und die Stirnflächen der jeweiligen Isolierkörper 3 in etwa parallel und in einem definierten Abstand zueinander ausgerichtet sind.

In der Schnittfigur 4 ist die Funktion der Spiralfeder 8 gut zu erkennen. Beide Isolierkörper 3 werden zum Steckbereich des jeweiligen Steckers 1, 2 bis hin zu einem Anschlag gedrückt.

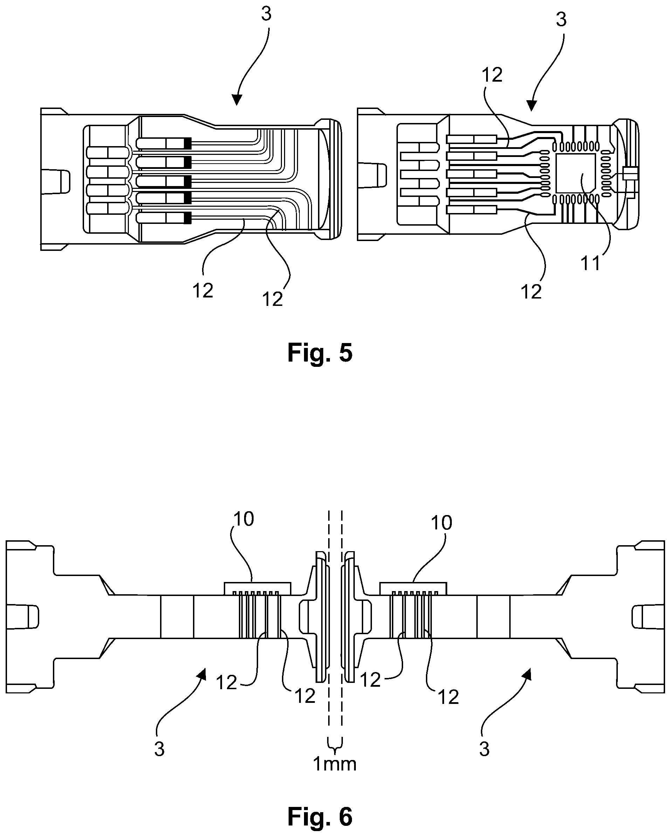

Die Figur 5 zeigt einmal die Oberseite und einmal die Unterseite des Isolierkörpers 3, der gleichermaßen im Steckverbinder 1 und im Gegensteckverbinder 2 verbaut ist. Der Isolierkörper 3 weist eine Vielzahl einzelner Leiterkanäle 12 auf, die mithilfe der MID-Technik realisiert sind. Dadurch kann die Führung der Kanäle 12 sehr flexibel gestaltet werden, was zu einem kleinen Bauteil (Isolierkörper 3) führt. Einige Leiterkanäle münden an einem Platz 11, der zur Aufbringung eines Mikrochips 10 vorgesehen ist. Durch den Mikrochip 10 können eingehende oder ausgehende Datensignale beliebig aufbereitet werden. Der Mikrochip 10 vermag es, die eingehenden Signale nach einem Multiplexverfahren weiterzuleiten.

In Figur 6 ist die Position der jeweiligen Isolierkörper 3 der Stecker 1, 2 zu sehen, die die Isolierkörper 3 im gesteckten Zustand einnehmen. Die zur Steckrichtung gewandten Stirnseiten der Isolierkörper 3 sind parallel zueinander ausgerichtet und haben einen Abstand von 1 mm zueinander. Aufwendige Tests haben gezeigt, dass ein solcher Abstand ideal zur kapazitiven Datenübertragung ist. Die Leiter eines mehradrigen Kabels können auf der gegenüberliegenden Stirnseite des Isolierkörpers 3 angeschlossen werden. Dies ist jedoch aus darstellerischen Gründen nicht gezeigt.

### Ausführungsbeispiel, das nicht Teil der Erfindung formt:

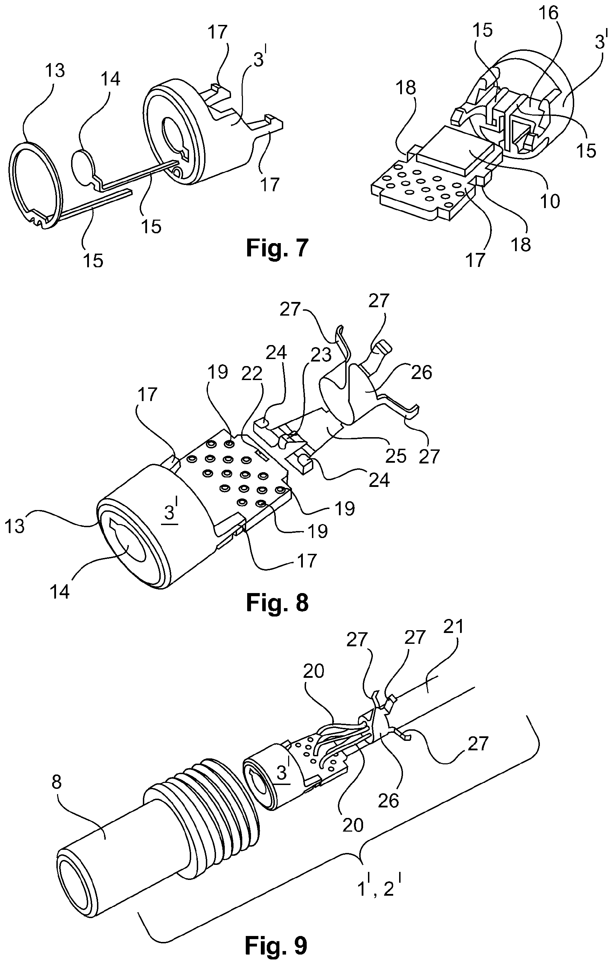

Die Figuren 7 bis 9 zeigen eine alternative Ausführungsform eines erfindungsgemäßen Steckers 1', 2'. In den Isolierkörper 3' sind stirnseitig zwei Signalübertragungsmittel 13, 14 eingebracht. Eine Signalübertragungsmittel 13 ist ringförmig und das andere Signalübertragungsmittel 14 ist als kreisrunde Platte ausgeführt. Beide Signalübertragungsmittel 13, 14 weisen die gleichen Flächenmaße und ein senkrecht zur Grundform abstehendes Anschlusselement 15 auf. Das Anschlusselement 15 wird zur Fixierung der Antennen 13, 14 über eine Fixierfläche 16 im Isolierkörper 3' gebogen.

Der Stecker 1', 2' weist eine Leiterkarte 17 auf, die wiederum Ausnehmungen 18 aufweist. Der Isolierkörper 3' weist Rastarme 17 auf, die zur Fixierung der Leiterkarte 17 mit dem Isolierkörper 3' in deren Ausnehmungen 18 verrasten.

Auf der Leiterkarte ist ein Mikrochip 10 aufgebracht, der im elektrischen Kontakt mit den Signalübertragungsmitteln 13, 14 und den angeschlossenen Leitern 20 steht. Die Leiterkarte 17 weist so genannte Lötpads 19 auf, die zur Lötverbindung der Leiters 20 eines (mehradrigen) Kabels 21 vorgesehen sind.

Weiterhin weist der Stecker 1', 2' ein Fixierelement 25 auf. Einseitig ist das Fixierelement 25 mit der Leiterkarte 17 verbunden. Dazu sind am Fixierelement seitlich Klemmlaschen 24 und eine dazwischen angeordnete Zunge 23 vorgesehen, wobei die Zunge in eine Ausnehmung 22 der Leiterkarte 17 eingreift.

Die andere Seite des Fixierelements 25 besteht aus einem Ringteil 26 mit radial davon abstehenden Fixierarmen 27, die endseitig leicht abgebogen sind und zur Kabelzugentlastung an den Kabelmantel des angeschlossenen Kabels 21 gedrückt werden. Das Fixierelement dient außerdem zur Schirmübergabe am angeschlossenen Kabel.

Das Gehäuse des Steckers 1', 2' kann verschiedenartig ausgeführt sein. Für die Erfindung ist die Gehäuseform nicht relevant, daher ist nur der Verschraubungsteil 28 in Figur 9 dargestellt.

### Ausführungsbeispiel, das nicht Teil der Erfindung formt:

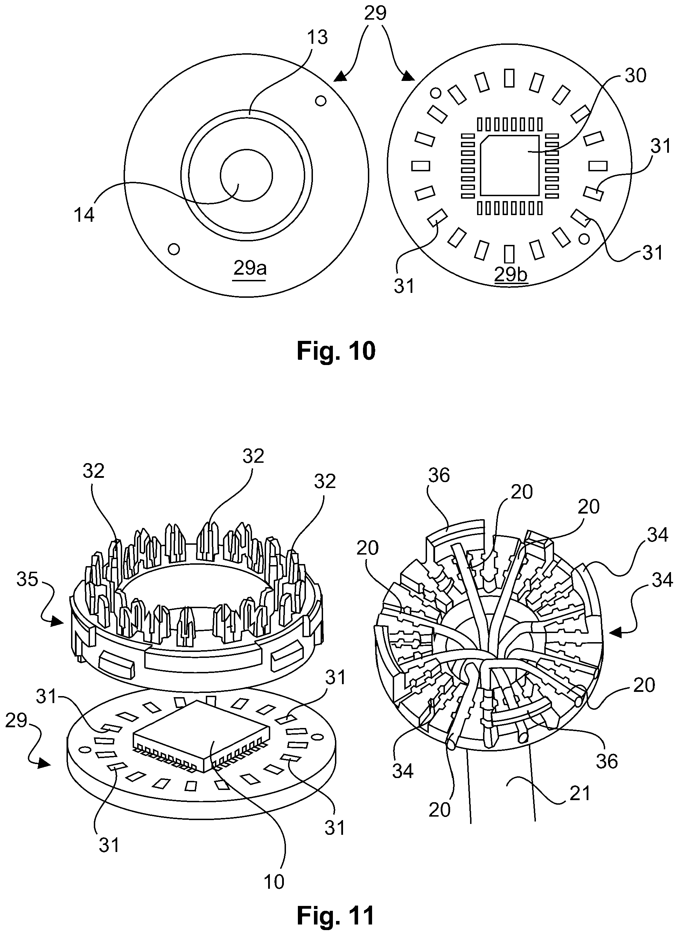

In Figur 10 ist eine elementare Komponente einer dritten Variante des erfindungsgemäßen Steckverbinders 1 zu sehen. Hier handelt es sich um eine kreisrunde Leiterplatte 29.

Leiterplatten bestehen bekanntermaßen aus elektrisch isolierendem Material mit daran haftenden, leitenden Verbindungen (Leiterbahnen). Als isolierendes Material ist faserverstärkter Kunststoff üblich. Die Leiterbahnen werden zumeist aus einer dünnen Schicht Kupfer geätzt. Die Bauelemente werden auf so genannten Lötflächen (Pads) gelötet.

Die erste Seite 29a der Leiterplatte 29 umfasst die Signalübertragungselemente, die wie oben beschrieben aus einer Kupferschicht gebildet sind. Die zweite Seite 29b der leiterplatte 29 weist einen Anbauplatz 30 für den oben bereits mehrfach erwähnten Mikrochip 10 auf. Außerdem sind hier Lötpads 31, Klemmstellen 31 oder elektrische Kontaktierungsstellen 31 für Schneidklemmen 32 vorgesehen. Hier werden die Schneidklemmen 32 elektrisch kontaktiert und mechanisch fixiert.

In Figur 11 sind die Bauteile zu sehen, die in Summe den Isolierkörper des Steckverbinders 1 herstellen. Zu sehen ist ein Kabelmanager, der im Wesentlichen aus einem zylinderförmigen Kunststoffteil gebildet ist. Hier sind Haltekanäle 34 vorgesehen, in welche die Leiter 20 des angeschlossenen Kabels 21 geklemmt werden können. Weiterhin ist ein ringförmiges Kontaktierungselement 35 vorhanden, welches Ausnehmungen aufweist, in welche Schneidklemmen 32 eingesetzt sind.

Der Kabelmanager 33 weist Fixierarme 36 mit fensterartigen Öffnungen auf, die mit Fixierstegen 37 des Kontaktierungselements 35 derart zusammenwirken, dass diese Bauteile 33, 34 miteinander fixiert sind. Die Schneidklemmen 32 und zugehörigen Leiterbahnen der Leiterplatte 29 (nicht gezeigt) stellen einen elektrischen Kontakt zwischen den Leitern 20 und dem Mikrochip 10 her.

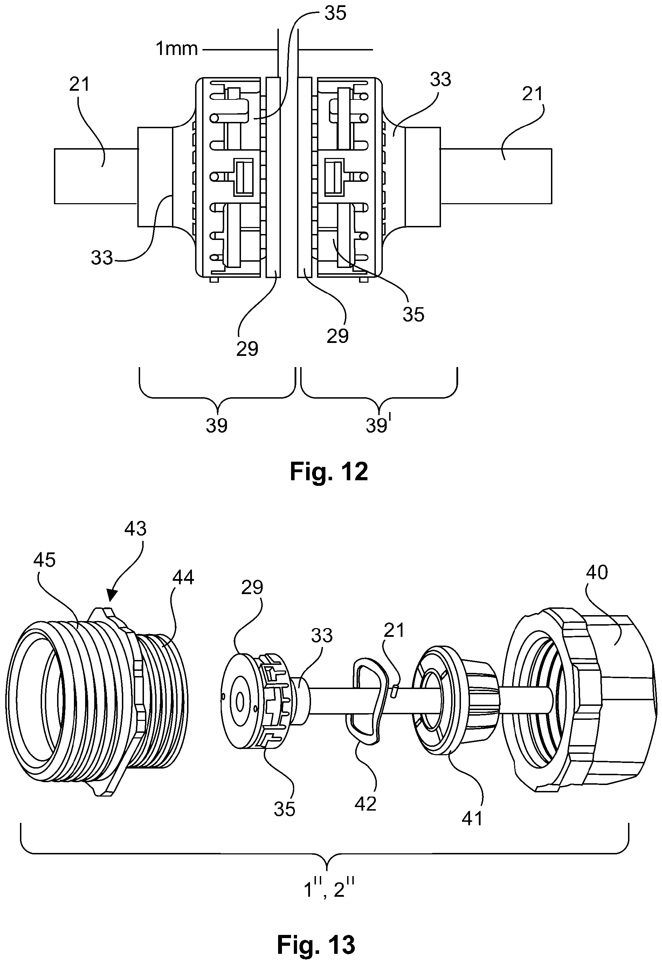

Die in Figur 11 gezeigte Bauteilkombination bildet den Isolierkörper 39 des Steckverbinders 1" und ist baugleich sowohl im Steckverbinder wie auch im dazugehörigen Gegensteckverbinder zu finden. In Figur 12 ist gezeigt wie die Leiterplatten, inklusive Signalübertragungsmittel 13, 14, von Steckverbinder und Gegensteckverbinder zueinander ausgerichtet sind. Die Ausrichtung ist parallel und der Abstand beträgt etwa 1 Millimeter.

In Figur 12 ist die vollständige Explosionszeichnung der dritten Steckverbindervariante 1" zu sehen. Der Steckverbinder 1" besteht kabelseitig aus einem Schraubkopf 40. Im Schraubkopf 40 ist ein kombiniertes Dicht- und Zugentlastungselement 41 positioniert. Zwischen Dicht- und Zugentlastungselement 41 und Isolierkörper 29 ist ein Wellenfederring 42 angeordnet, der im Wesentlichen die gleiche Aufgabe erfüllt wie die oben beschriebene Spiralfeder 8 der ersten beiden Ausführungsbeispiele des Steckverbinders 1, 1'. Steckseitig ist ein Doppelschraubkopf 43 vorgesehen, dessen eines Gewinde 44 mit dem Schraubkopf 40 verbindbar ist. Das gegenüberliegende Gewinde 45 ist zur Fixierung mit einem Gegensteckverbinder vorgesehen.

### Erstes und zweites Ausführungsbeispiel der Erfindung:

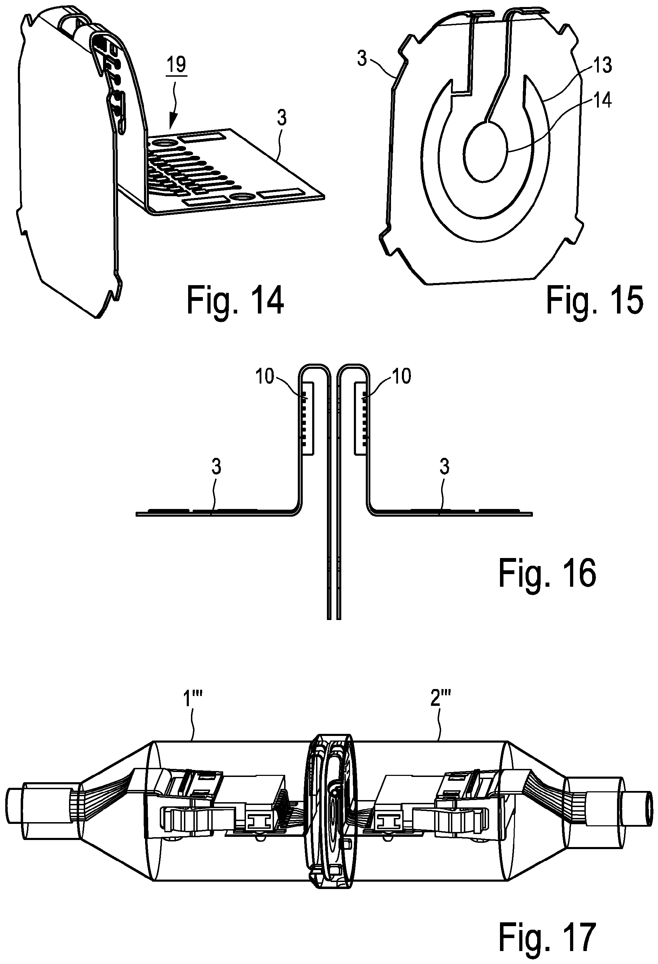

Figur 14 zeigt eine perspektivische Ansicht eines Isolierkörpers 3 eines ersten Ausführungsbeispiels. Der Isolierkörper 3 ist als flexible Leiterplatte ausgebildet, die in sich gefaltet ist und insofern in der Seitenansicht (siehe Figur 16) eine Form aufweist, die im Wesentlichen einem "T" entspricht. In Figur 14 sind zudem Lötpads 19 des Isolierkörpers 3 zu erkennen.

Figur 15 zeigt eine Teilansicht des Isolierkörpers 3 aus Figur 14 aus anderer Perspektive mit zwei Signalübertragungsmitteln 13, 14.

Wie auch schon bei beispielsweise Figur 7 und Figur 10 sind die Signalübertragungsmittel 13, 14 im Wesentlichen Ringförmig (Signalübertragungsmittel 13) bzw. kreisrund (Signalübertragungsmittel 14) ausgeführt, wobei das kreisrunde Signalübertragungsmittel 14 konzentrisch mit dem im Wesentlichen ringförmigen Signalübertragungsmittel 13 angeordnet ist. Die Signalübertragungsmittel 13, 14 sind auf der Seite des Isolierkörpers 3 angeordnet, der in Figur 14 dem in der Darstellung zur erkennbaren senkrecht angeordneten Endteil gegenüberliegt.

Figur 16 zeigt eine Seitenansicht von zwei zueinander angeordneten Isolierkörpern 3 des ersten Ausführungsbeispiels. Wie schon in Figur 14 zu erkennen, weisen die Isolierkörper 3 in der Seitenansicht jeweils eine Form auf, die im Wesentlichen einem "T" entspricht, wobei der jeweilige Isolierkörper 3 in einer Hälfte des Kehrbalkens des "T" über sich gefaltet ist. In diesem Faltbereich ist jeweils der Mikrochip 10 angeordnet, der damit den Signalübertragungsmitteln 13, 14 gegenüber liegt.

Wenn die in Figur 14 auf der linken Seite zu erkennende Seitenfläche die Außenfläche des Isolierkörpers und letztlich des Steckverbinders bildet, sind die Signalübertragungsmittel 13, 14 und der Mikrochip 10 auf der Innenseite der flexiblen Leiterplatte durch diese gegenüber der Außenwelt geschützt.

Figur 17 ist eine Ansicht von Steckverbinder 1'" und Gegensteckverbinder 2'" des ersten Ausführungsbeispiels.

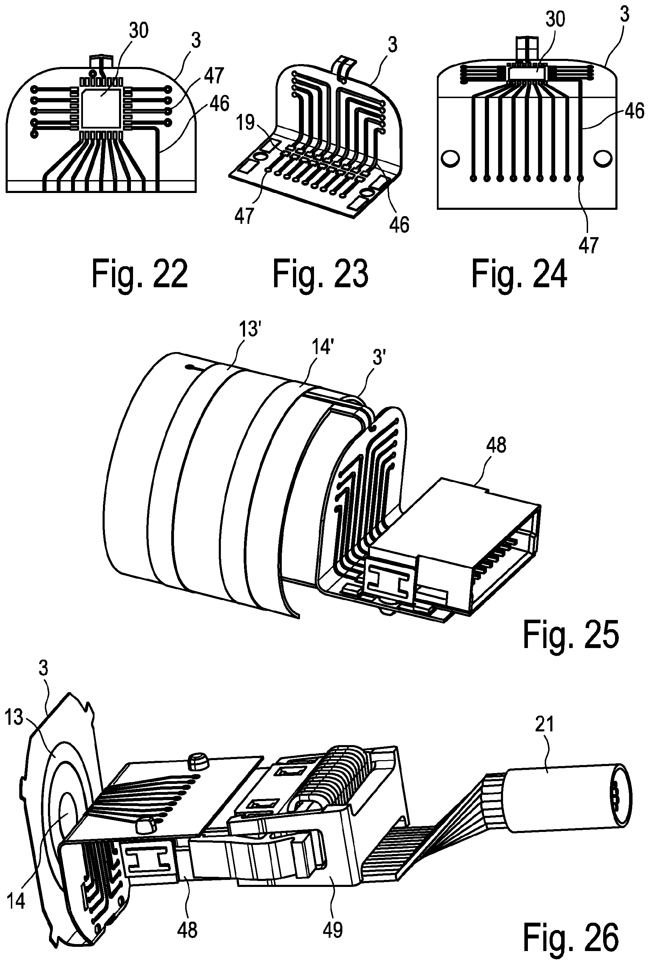

Weitere Details, die in Figur 17 zu erkennen sind, werden im Folgenden anhand der Figuren 25, 26 und 29 bis 31 erläutert.

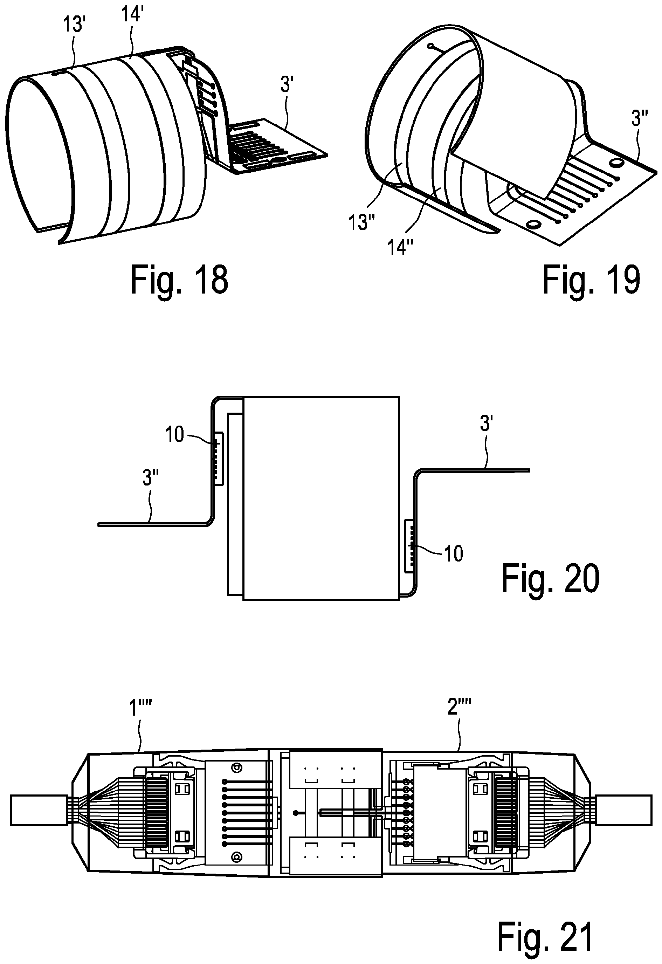

Figur 18 ist eine perspektivische Ansicht eines Isolierkörpers 3' eines zweiten Ausführungsbeispiels.

Wie schon beim ersten Ausführungsbeispiel ist der Isolierkörper 3' als flexible Leiterplatte ausgebildet, wobei der in Figur 18 dargestellte Isolierkörper 3' anstelle des in beispielsweise Figur 14 erkennbaren gefalteten Bereichs des dort gezeigten Isolierkörpers einen im Wesentlichen röhrenförmigen Bereich aufweist, auf dem jeweils ringförmig gebogene und als Streifen ausgeführte Signalübertragungsmittel 13' und 14' vorgesehen sind.

Figur 18 zeigt eine perspektivische Ansicht eines anderen Isolierkörpers 3" des zweiten Ausführungsbeispiels. Der Isolierkörper 3" entspricht in seinem grundsätzlichen Aufbau im Wesentlichen dem Isolierkörper 3' der in Figur 18 gezeigt ist, wobei allerdings die ebenfalls streifenförmig ausgebildeten und zu Ringen gebogenen Signalübertragungsmittel 13", 14" auf der Innenseite des röhrenförmigen Teils des Isolierkörpers 3" angeordnet sind, während sich die Signalübertragungsmittel 13', 14' des Isolierkörpers 3' aus Figur 18 auf der Außenseite des röhrenförmigen Bereichs befinden.

Figur 20 zeigt eine Seitenansicht von zwei zueinander angeordneten Isolierkörpern 3', 3" des zweiten Ausführungsbeispiels. Wie anhand von Figur 20 zu erkennen ist, sind die Isolierkörper 3', 3", die in Figur 18 und 19 gezeigt sind für eine Kopplung miteinander in Form eines männlichen Kopplungselements (siehe Figur 18) und eines weiblichen Kopplungselements (siehe Figur 19) ausgestaltet.

Die Signalübertragungsmittel 13', 14' und 13", 14" liegen einander jeweils gegenüber, ohne dass allerdings hierbei eine direkte Kontaktierung vorgesehen wäre.

Bei ausreichend dünner Ausgestaltung der flexiblen Leiterplatte, die die Isolierkörper 13', 13" bildet, können die Signalübertragungsmittel 13', 13", 14', 14" auch jeweils beide auf der Außenseite bzw. Innenseite des röhrenförmigen Teils des Isolierkörpers 3', 3" angeordnet sein. Ist die flexible Leiterplatte ausreichend dünn, kann auch eine Umkehrung insofern vorgenommen werden, als dass der weibliche Kopplungsanteil seine Signalübertragungsmittel auf der Außenseite und der männliche Kopplungsanteil seine Signalübertragungsmittel auf der Innenseite trägt.

Ähnlich zu Figur 16 sind auch in Figur 20 die entsprechenden Mikrochips 10 an den jeweiligen Stellen des Isolierkörpers 3', 3" zu erkennen.

Figur 21 zeigt eine Ansicht von Steckverbinder 1"" und Gegensteckverbinder 2"" des zweiten Ausführungsbeispiels. Zu weiteren Details sei auf die Figuren 25, 32 und 33 verwiesen.

Figuren 22 bis 24 zeigen jeweils Teilansichten eines Isolierkörpers 3 des ersten oder zweiten Ausführungsbeispiels.

Der Isolierkörper 3, der in Form einer flexiblen Leiterplatte ausgebildet ist, weist Leiterbahnen 46 auf jeweils beiden Seiten auf, womit insgesamt eine Platzersparnis erreicht werden kann. Um eine ausreichende Kontaktierung zu ermöglichen, sind Durchgangslöcher 47 vorgesehen, so dass eine Leiterbahn 46 mit einer entsprechenden Leiterbahn 46 auf der gegenüberliegenden Seite des Isolierkörpers 3 in Verbindung steht.

In Figur 22 ist der Anbauplatz 30 für den Mikrochip 10 zu erkennen, während in Figur 23 die Lötpads 19 zum Anschluss der Leiter des Kabels zu erkennen sind.

Figur 25 zeigt eine perspektivische Ansicht eines Isolierkörpers 3' des zweiten Ausführungsbeispiels mit einem daran angebrachten Kabelanschlussstecker 48.

Eine Möglichkeit zur Kontaktierung der Lötpads 19 mit den Leitern des Kabels (hier nicht dargestellt) besteht darin, an diesen Lötpads einen Kabelanschlussstecker anzubringen, beispielsweise einen H-Flex SMT-Verbinder, an dem dann wiederum ein entsprechender Kabelanschlussgegenstecker angekoppelt werden kann, mit dem die Leiter des Kabels 21 verbunden sind.

Figur 26 zeigt eine perspektivische Ansicht eines Isolierkörpers 3 des ersten Ausführungsbeispiels mit daran angebrachtem Kabelanschlussstecker 48, 49 mit angeschlossenem Kabel 21.

Es ist jedoch ebenfalls möglich, die Leiter des Kabels jeweils direkt an dem entsprechenden Lötpad anzubringen, wobei der damit für das Herstellungsverfahren notwendige höhere apparative Aufwand durch Einsparungen hinsichtlich der Materialkosten der Kabelanschlussstecker gerechtfertigt sein kann.

Wenn das Kabel 21 am Isolierkörper 3, 3', 3" des ersten oder zweiten Ausführungsbeispiels direkt oder indirekt angebracht ist, können das Kabel und der Isolierkörper gemeinsam in ein geeignetes Material vergossen werden, so dass eine gewünschte Versiegelung der Gesamtanordnung erreicht werden kann, die insbesondere gegen einen Einfluss von Feuchtigkeit oder Ähnlichem Schutz bietet.

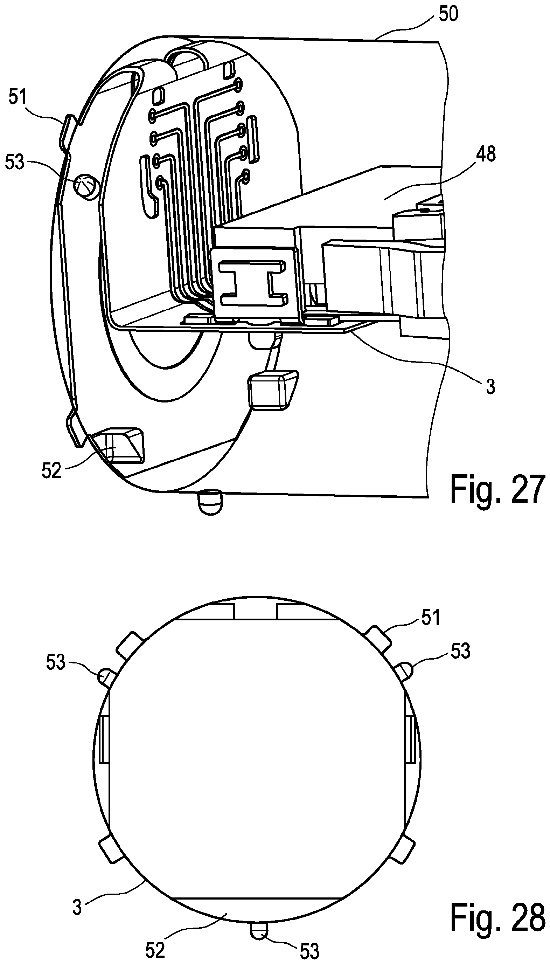

Figur 27 und Figur 28 sind Ansichten zur Illustration eines Einbettens des Isolierkörpers 3 des ersten Ausführungsbeispiels. In Figur 27 ist der Isolierkörper 3 mit daran angebrachtem Kabelanschlussstecker 48 zu erkennen, der in einer Vergussmasse 50 eingeschlossen ist.

Der Isolierkörper 3 weist Halteohren 51 auf, die es in der Form zum Einbetten ermöglichen, den Endbereich des Isolierkörpers 3 in gewünschter Weise zu fixieren, insbesondere derart, dass eine ausreichende Parallelität zur Endfläche gegeben ist.

Es ist hierbei möglich, den Isolierkörper 3 entweder einseitig oder beidseitig einzubetten, wobei bei einer einseitigen Einbettung der Endbereich des Isolierkörpers 3 auch die Außenfläche des damit hergestellten Steckverbinders an seiner Stirnfläch darstellt.

Die in Figur 27 ebenfalls zu erkennenden Aussparungen 2 ergeben sich durch ein vorsehen von entsprechenden Wandvorsprüngen in der Form, durch die der Endbereich des Isolierkörpers 3 an die Formfläche gepresst wird.

Die Halteohren 51 des Isolierkörpers 3 sind ebenfalls in Figur 28 zu erkennen.

Wie zudem den Figuren 27 und 28 zu entnehmen ist, sind beim Ausbilden der Vergussmasse Bajonettknöpfe 53 vorgesehen.

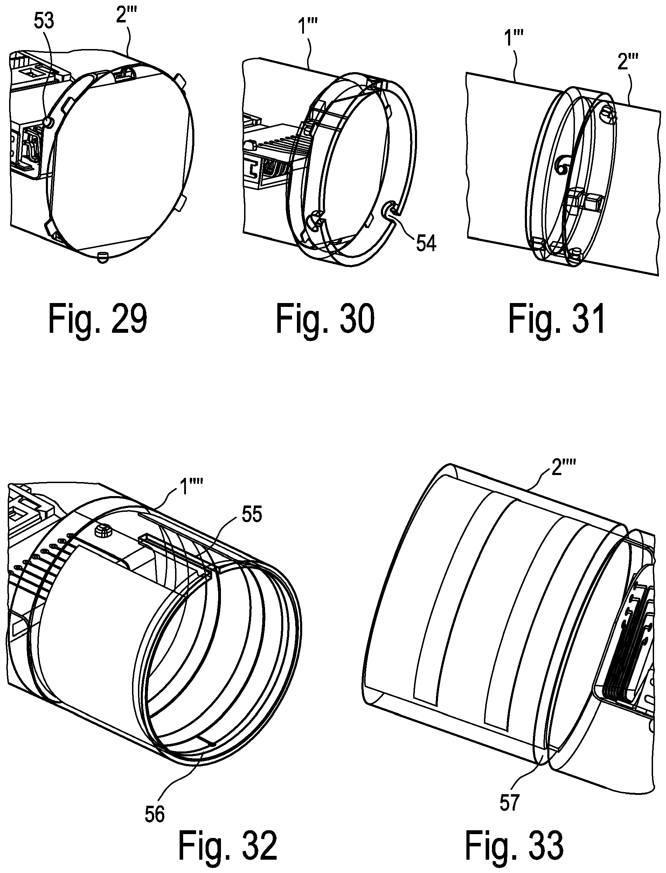

Die Figuren 29, 30 und 31 zeigen perspektivische Ansichten des Steckverbinders 1'" und des Gegensteckverbinders 2'" des ersten Ausführungsbeispiels. Wie schon in den Figuren 27 und 28 gezeigt, weist der in Figur 29 gezeigt Gegensteckverbinder 2'" Bajonettknöpfe 53 auf, während der in Figur 30 gezeigte Steckverbinder 1'" an einem entsprechend vorspringenden Teil Bajonettschlitze 54 aufweist, in die die Bajonettknöpfe 53 eingreifen können, um eine Fixierung von Steckverbinder 1'" und Gegensteckverbinder 2'" zueinander zu erreichen, wie dies in Figur 31 gezeigt ist.

Figur 32 und Figur 33 zeigen perspektivische Ansichten des Steckverbinders 1"" und des Gegensteckverbinders 2"" des zweiten Ausführungsbeispiels.

Auch der Isolierkörper des Steckverbinders 1'" und der Isolierkörper des Gegensteckverbinders 2"" sind jeweils in geeigneter Weise versiegelt, wobei die Versiegelung im Fall des Steckverbinders 1"" einen längsverlaufenden Schlitz aufweist, der eine Flexibilität hinsichtlich einer Verformung zur Aufweitung des ringförmigen Bereichs erlaubt. Zudem weist der Steckverbinder 1"" im Endbereich einen Ringvorsprung auf, der auf der Innenseite umläuft.

Dementsprechend, wie in Figur 33 dargestellt, weist der Gegensteckverbinder 2"" an einer entsprechenden Stelle eine Ringnut 57 auf mit der der Ringvorsprung 56 in Eingriff bringbar ist, um so eine gewisse Fixierung von Steckverbinder 1"" und Gegensteckverbinder 2"" miteinander zu erreichen.

**Bezugszeichenliste**

| | | | | |
|---|---|---|---|---|
| 1 | Steckverbinder | | 15 | Anschlusselement |
| 2 | Gegensteckverbinder | | 16 | Fixierfläche |
| 3 | Isolierkörper | | 17 | Leiterkarte |
| 4 | Gehäuse | | 18 | Ausnehmung |
| 5 | Kabelabgang | | 19 | Lötpad |
| 6 | Verschraubhülse | | 20 | Leiter |
| 7 | Dichtung | | 21 | Kabel |
| 8 | Spiralfeder | | 22 | Ausnehmung |
| 9 | Fixierblech | | 23 | Zunge |
| 10 | Mikrochip | | 24 | Klemmlasche |
| 11 | Platz für den Chip 10 | | 25 | Fixierelement |
| 12 | Leiterkanal | | 26 | Ringteil |
| 13 | Signalübertragungsmittel | | 27 | Fixierarm |
| 14 | Signalübertragungsmittel | | 28 | Verschraubungsteil |
| | | | | |
| 29 | Leiterplatte | 29a erste Seite | 44 | Gewinde |
| | | 29b zweite Seite | | |
| 30 | Anbauplatz für den Mikrochip 10 | | 45 | Gewinde |
| 31 | Lötpad, Klemmstelle oder elektrische Kontaktierungsstelle | | 46 | Leiterbahn |
| 32 | Schneidklemme | | 47 | Durchgangsloch |
| 33 | Kabelmanager | | 48 | Kabelanschlussstecker |
| 34 | Haltekanal | | 49 | Kabelanschlussstecker |
| 35 | Kontaktierungselement | | 50 | Vergussmasse |
| 36 | Fixierarm | | 51 | Halteohr |
| 37 | Fixiersteg | | 52 | Aussparung |
| 39 | Isolierkörper | | 53 | Bajonettknopf |
| 40 | Schraubkopf | | 54 | Bajonettschlitz |
| 41 | Dicht- und Zugentlastungselement | | 55 | Schlitz |
| 42 | Wellenfederring | | 56 | Ringvorsprung |
| 43 | Doppelschraubkopf | | 57 | Ringnut |

## Patentansprüche

1. Steckverbinder (1, 1"', 1""), an welchem ein mehradriges Kabel (21) mit zumindest zwei oder mehr einzelnen Leitern (20) anschließbar ist,
• wobei der Steckverbinder (1, 1'", 1"") auf einer Seite eines Isolierkörpers (3) des Steckverbinders (1, 1"', 1"") zwei Signalübertragungsmittel (13, 14, 13', 14', 13", 14") zur berührungslosen Signalübertragung aufweist,
• wobei der Steckverbinder (1, 1'", 1"") einen Mikrochip (10) aufweist, wobei der Mikrochip (10) elektrisch mit den einzelnen Leitern (20) verbindbar ist und elektrisch mit den Signalübertragungsmittel (13, 14, 13', 14', 13", 14") verbunden ist,
wobei der Mikrochip (10) ein aktiver Mikrochip (10) ist, der dazu ausgestaltet ist, eingehende Signale nach einem Multiplexingverfahren zu verarbeiten und weiterzuleiten,
wobei
ein Signalübertragungsmittel als Ringkondensator (13, 13', 13") und das andere Signalübertragungsmittel als kreisförmige Kondensatorplatte (14, 14', 14") ausgebildet ist,
wobei die kreisförmige Kondensatorplatte (14,14', 14") konzentrisch mit dem Ringkondensator (13, 13', 13") angeordnet ist,
wobei der Isolierkörper (3) in einer Seitenansicht eine Form aufweist, die im Wesentlichen einem "T" entspricht, wobei der Isolierkörper (3) in einer Hälfte eines Querbalkens des "T" über sich gefaltet ist, wobei der Mikrochip (10) in diesem Faltbereich angeordnet ist und damit den Signalübertragungsmitteln (13, 14, 13', 14', 13", 14") gegenüberliegt.

2. Steckverbinder nach Anspruch 1,
**dadurch gekennzeichnet, dass**
der Ringkondensator (13, 13', 13") und die kreisförmige Kondensatorplatte (14, 14', 14") eine gleich große Oberfläche aufweisen.

3. Steckverbinder nach einem der vorstehenden Ansprüche,
**dadurch gekennzeichnet,**
• **dass** der Steckverbinder (1, 1"', 1"") ein Steckverbindergehäuse (4) aufweist, wobei an dessen Stirnflächen eine Steckseite und eine Anschlussseite ausgebildet sind ,
• und **dass** die Signalübertragungsmittel (13, 14, 13', 14', 13", 14") von der Steckseite des Gehäuses vollständig umschlossen sind.

4. Steckverbinder nach einem der vorstehenden Ansprüche,
**dadurch gekennzeichnet, dass**
das Signalübertragungsmittel (13, 14, 13', 14', 13", 14") steckseitig parallel zur Stirnfläche des Steckverbinders (1, 1"', 1"") ausgerichtet ist.

5. Steckverbinder nach einem der vorstehenden Ansprüche
**dadurch gekennzeichnet, dass**
der Isolierkörper (3) zumindest einen Leiterkanal (12) aufweist, der einseitig elektrisch mit dem Mikrochip (10) verbunden ist und andersseitig elektrisch mit einem Leiter (20) des angeschlossenen Kabels (21) verbindbar ist.

6. Steckverbinder nach Anspruch 5,
**dadurch gekennzeichnet, dass**
der zumindest eine Leiterkanal (12) mithilfe der MID-Technik hergestellt ist.

7. Steckverbinder nach einem der beiden vorstehenden Ansprüche,
**dadurch gekennzeichnet, dass**
im Steckverbindergehäuse (4) ein Federelement, vorzugsweise eine Spiralfeder (8), derart angeordnet ist, dass die Federkraft des Federelements den Isolierkörper (3) axial in Steckrichtung des Steckverbinders (1, 2) drückt.

8. System aus Steckverbinder (1, 1"', 1"") und Gegensteckverbinder (2, 2"', 2""), die beide jeweils gemäß einem der Ansprüche 1-7 ausgeführt sind,
**dadurch gekennzeichnet, dass**
die jeweiligen Signalübertragungsmittel (13, 14, 13', 14', 13", 14") im gestecktem Zustand parallel zueinander ausgerichtet sind.

9. System aus Steckverbinder (1, 1"', 1"") und Gegensteckverbinder (2, 2'", 2"") nach Anspruch 8, **dadurch gekennzeichnet, dass**
die Signalübertragungsmittel (13, 14) im gestecktem Zustand einen Abstand von 1,1 Millimeter (mm) oder weniger zueinander haben.

10. System aus Steckverbinder und Gegensteckverbinder nach einem der zwei vorstehenden Ansprüche,
**dadurch gekennzeichnet, dass**
der Steckverbinder (1, 1'", 1"") und der Gegensteckverbinder (2, 2'", 2"") über eine Push-Pull-Verriegelung miteinander verbunden sind.

## Claims

1. A plug connector (1, 1"', 1""), to which a multicore cable (21) having at least two or more individual conductors (20) can be connected,
• wherein the plug connector (1, 1"', 1"") has, on one side of an insulating body (3) of the plug connector (1, 1"', 1""), two signal transmission means (13, 14, 13', 14', 13", 14") for contactless signal transmission,
• wherein the plug connector (1, 1'", 1"") has a microchip (10), wherein the microchip (10) can be electrically connected to the individual conductors (20) and is electrically connected to the signal transmission means (13, 14, 13', 14', 13", 14"),
wherein the microchip (10) is an active microchip (10), which is arranged for processing and passing on incoming signals by using a multiplexing technique,
wherein one signal transmission means (13, 13', 13") is provided in the form of a ring-shaped capacitor (13, 13', 13") and the other signal transmission means(14, 14', 14") is provided in the form of a circular capacitor plate (14, 14', 14"),
wherein the circular capacitor plate (14, 14', 14")is arranged concentrically with the ring-shaped capacitor (13, 13', 13"),
wherein the insulating body (3) has, in side view, a shape that substantially corresponds to a "T", wherein the insulating body (3) is, in one half of the crossbeam of the "T", folded back on itself, wherein the microchip (10) is arranged in this folded region and lies opposite to the signal transmission means (13, 14, 13', 14', 13", 14")

2. The plug connector according to claim 1,
**characterised in that**
the ring-shaped capacitor (13, 13', 13") and the circular capacitor plate (14, 14', 14") have an equally large surface.

3. The plug connector according to any one of the preceding claims,
**characterised in that**
• the plug connector (1, 1'", 1"") has a plug connector housing (4), wherein a mating side and a wiring side are formed at its end faces,
• and the signal transmission means (13, 14, 13', 14', 13", 14") are completely enclosed by the mating side of the housing.

4. The plug connector according to any one of the preceding claims,
**characterised in that**
the signal transmission means (13, 14, 13', 14', 13", 14") is aligned on the mating side parallel to the end face of the plug connector (1, 1"', 1"").

5. The plug connector according to any one of the preceding claims,
**characterised in that**
the insulating body (3) has at least one conductor channel (12) which is electrically connected on one side to the microchip (10) and which can be electrically connected on the other side to a conductor (20) of the connected cable (21).

6. The plug connector according to claim 5,
**characterised in that**
the at least one conductor channel (12) is produced using MID technology.

7. The plug connector according to any one of the two preceding claims,
**characterised in that**
a spring element, preferably a helical spring (8), is arranged in the plug connector housing (4) in such a way that the spring force of the spring element presses the insulating body (3) axially in the mating direction of the plug connector (1, 2).

8. A system comprising a plug connector (1, 1"', 1"") and a mating connector (2, 2"', 2""), each of which according to one of the claims 1 to 7,
**characterised in that**
the respective signal transmission means (13, 14, 13', 14', 13", 14") are aligned parallel to each other when mated.

9. The system comprising a plug connector (1, 1'", 1"") and a mating connector (2, 2"', 2"") according to claim 8,
**characterised in that**
the signal transmission means (13, 14, 13', 14', 13", 14") are spaced 1.1 millimetres (mm) or less apart from each other when mated.

10. The system comprising a plug connector and a mating connector according to any one of the two preceding claims,
**characterised in that**
the plug connector (1, 1'", 1"") and the mating connector (2, 2'", 2"") are connected to one other by a push-pull locking mechanism.

## Revendications

1. Connecteur enfichable (1, 1"', 1""), au niveau duquel un câble (21) multiconducteur avec au moins deux conducteurs (20) individuels ou plus peut être raccordé,
- dans lequel le connecteur enfichable (1, 1"', 1"") présente sur un côté d'un corps isolant (3) du connecteur enfichable (1, 1"', 1"") deux moyens de transmission de signaux (13, 14, 13', 14', 13", 14") pour la transmission de signaux sans contact,
- dans lequel le connecteur enfichable (1, 1"', 1"") présente une micro-puce (10), dans lequel la micro-puce (10) peut être reliée électriquement aux conducteurs (20) individuels et est reliée électriquement aux moyens de transmission de signaux (13, 14, 13', 14', 13", 14"),
dans lequel la micro-puce (10) est une micro-puce (10) active, qui est configurée pour traiter et transmettre des signaux entrants selon un procédé de multiplexage,
dans lequel un moyen de transmission de signaux est réalisé en tant que condensateur annulaire (13, 13', 13") et l'autre moyen de transmission de signaux est réalisé en tant que plaque de condensateur circulaire (14, 14', 14"),
dans lequel la plaque de condensateur circulaire (14, 14', 14") est agencée concentriquement avec le condensateur annulaire (13, 13', 13"),
dans lequel le corps isolant (3) présente dans une vue latérale une forme, qui correspond sensiblement à un « T », dans lequel le corps isolant (3) est plié sur lui-même dans une moitié d'une barre transversale du « T », dans lequel la micro-puce (10) est agencée dans cette zone de pliage et ainsi fait face aux moyens de transmission de signaux (13, 14, 13', 14', 13", 14").

2. Connecteur enfichable selon la revendication 1,
**caractérisé en ce que**
le condensateur annulaire (13, 13', 13'') et la plaque de condensateur circulaire (14, 14', 14'') présentent une surface de même taille.

3. Connecteur enfichable selon l'une quelconque des revendications précédentes,
**caractérisé en ce**
- **que** le connecteur enfichable (1, 1''', 1'''') présente un boîtier de connecteur enfichable (4), dans lequel un côté enfichage et un côté raccordement sont réalisés au niveau de ses surfaces frontales,
- et **que** les moyens de transmission de signaux (13, 14, 13', 14', 13", 14'') du côté enfichage du boîtier sont entièrement enfermés.

4. Connecteur enfichable selon l'une quelconque des revendications précédentes,
**caractérisé en ce que**
le moyen de transmission de signaux (13, 14, 13', 14', 13'', 14'') est orienté côté enfichage parallèlement à la surface frontale du connecteur enfichable (1, 1''', 1'''').

5. Connecteur enfichable selon l'une quelconque des revendications précédentes,
**caractérisé en ce que**
le corps isolant (3) présente au moins un canal de conducteurs (12), qui est relié d'un côté électriquement à la micro-puce (10) et peut être relié de l'autre côté électriquement à un conducteur (20) du câble (21) raccordé.

6. Connecteur enfichable selon la revendication 5,
**caractérisé en ce que**
l'au moins un canal de conducteurs (12) est fabriqué à l'aide de la technique MID.

7. Connecteur enfichable selon l'une quelconque des deux revendications précédentes,
**caractérisé en ce que**
un élément ressort, de préférence un ressort hélicoïdal (8), est agencé dans le boîtier de connecteur enfichable (4) de sorte que la force de ressort de l'élément ressort pousse le corps isolant (3) axialement dans la direction d'enfichage du connecteur enfichable (1, 2).

8. Système connecteur enfichable (1, 1''', 1'''') et contre-connecteur enfichable (2, 2''', 2''''), qui sont réalisés tous deux respectivement selon l'une quelconque des revendications 1 à 7,
**caractérisé en ce que**
les moyens de transmission de signaux (13, 14, 13', 14', 13'', 14'') respectifs sont orientés parallèlement l'un à l'autre à l'état enfiché.

9. Système connecteur enfichable (1, 1''', 1'''') et contre-connecteur enfichable (2, 2''', 2'''') selon la revendication 8,
**caractérisé en ce que**
les moyens de transmission de signaux (13, 14) à l'état enfiché ont une distance de 1,1 millimètre (mm) ou moins l'un par rapport à l'autre.

10. Système connecteur enfichable et contre-connecteur enfichable selon l'une quelconque des deux revendications précédentes,
**caractérisé en ce que**
le connecteur enfichable (1, 1''', 1'''') et le contre connecteur enfichable (2, 2''', 2'''') sont reliés l'un à l'autre par le biais d'un verrouillage push-pull.
